# EUROPÄISCHE PATENTANMELDUNG

(11) **EP 4 234 911 A1**
(43) Veröffentlichungstag der Anmeldung: **30.08.2023**
(21) Anmeldenummer: 22158917.9
(22) Anmeldetag: 25.02.2022
(51) Int. Cl.: F02D 41/22, B25F 5/00, F02D 41/26, G05B 19/4065

(54) **VERFAHREN ZUM BESTIMMEN EINER INFORMATION ÜBER EINE VERÄNDERUNG EINES MOBILEN GARTEN-, FORST-, BAU- ODER BODENBEARBEITUNGSGERÄTS, MOBILES GARTEN-, FORST-, BAU- ODER BODENBEARBEITUNGSGERÄT UND SYSTEM**

(71) Anmelder: Andreas Stihl AG & Co. KG, 71336 Waiblingen (DE)
(72) Erfinder: LANG, Johannes, 71404 Korb (DE); RENZ, Johann-Sebastian, 72810 Gomaringen (DE); HÜGEL, Philipp Tobias Martin, 71404 Korb (DE)
(74) Vertreter: Patentanwälte Ruff, Wilhelm, Beier, Dauster & Partner mbB

(57) **Zusammenfassung**

Die Erfindung bezieht sich auf ein Verfahren zum Bestimmen einer Information (Info) über eine Veränderung (VA) eines mobilen Garten-, Forst-, Bau- oder Bodenbearbeitungsgeräts (1), wobei das Garten-, Forst-, Bau- oder Bodenbearbeitungsgerät (1) ein Motorantriebssystem (2) aufweist, wobei das Verfahren die Schritte aufweist:
a) zeitlich wiederholtes Erfassen einer Kenngröße (KG) des Motorantriebssystems (2),
b) Vergleichen mindestens eines ersten Werts (W1) der erfassten Kenngröße oder einer darauf basierenden Größe (BG1) aus einem ersten Zeitraum (ZR1) und mindestens eines zweiten Werts (W2) der erfassten Kenngröße oder der darauf basierenden Größe (BG2) aus einem zweiten Zeitraum (ZR2) miteinander, und
c) Speichern der Information (Info) über die Veränderung (VA) des Garten-, Forst-, Bau- oder Bodenbearbeitungsgeräts (1) in Abhängigkeit von einem Ergebnis des Vergleichens.

## Beschreibung

### ANWENDUNGSGEBIET UND STAND DER TECHNIK

Die Erfindung bezieht sich auf ein Verfahren zum Bestimmen einer Information über eine Veränderung eines mobilen Garten-, Forst-, Bau- oder Bodenbearbeitungsgeräts, ein mobiles Garten-, Forst-, Bau- oder Bodenbearbeitungsgerät zum Bestimmen einer Information über eine Veränderung des Garten-, Forst-, Bau- oder Bodenbearbeitungsgeräts und ein System aufweisend ein solches Garten-, Forst-, Bau- oder Bodenbearbeitungsgerät.

### AUFGABE UND LÖSUNG

Der Erfindung liegt als Aufgabe die Bereitstellung eines Verfahrens zum Bestimmen einer Information über eine Veränderung eines mobilen Garten-, Forst-, Bau- oder Bodenbearbeitungsgeräts, eines mobilen Garten-, Forst-, Bau- oder Bodenbearbeitungsgeräts zum Bestimmen einer Information über eine Veränderung des Garten-, Forst-, Bau- oder Bodenbearbeitungsgeräts und eines Systems aufweisend ein solches Garten-, Forst-, Bau- oder Bodenbearbeitungsgerät zugrunde, wobei das Verfahren, das Garten-, Forst-, Bau- oder Bodenbearbeitungsgerät und das System jeweils verbesserte Eigenschaften aufweisen.

Die Erfindung löst diese Aufgabe durch die Bereitstellung eines Verfahrens und eines mobilen Garten-, Forst-, Bau- oder Bodenbearbeitungsgeräts beschrieben in den unabhängigen Ansprüchen. Vorteilhafte Weiterbildungen und/oder Ausgestaltungen der Erfindung sind in den abhängigen Ansprüchen beschrieben.

Das erfindungsgemäße Verfahren ist zum Bestimmen einer Information über eine Veränderung eines mobilen Garten-, Forst-, Bau- oder Bodenbearbeitungsgeräts vorgesehen bzw. ausgebildet. Das Garten-, Forst-, Bau- oder Bodenbearbeitungsgerät weist ein Motorantriebssystem auf. Das Verfahren weist die Schritte auf: a) zeitlich wiederholtes Erfassen einer Kenngröße des Motorantriebssystems. b) Vergleichen mindestens, insbesondere nur, eines ersten Werts der erfassten Kenngröße oder einer darauf basierenden Größe aus einem ersten Zeitraum und mindestens, insbesondere nur, eines zweiten Werts der erfassten Kenngröße, insbesondere eines selben Typs, oder der darauf basierenden Größe, insbesondere eines selben Typs, aus einem zweiten Zeitraum miteinander. c) Speichern der Information über die Veränderung des Garten-, Forst-, Bau- oder Bodenbearbeitungsgeräts in Abhängigkeit von einem Ergebnis des Vergleichens.

Dies, insbesondere das Vergleichen, ermöglicht ein Erkennen der Veränderung. Zusätzlich oder alternativ ermöglicht dies, insbesondere das Speichern in Abhängigkeit von dem Ergebnis des Vergleichens, das Speichern, insbesondere nur, im Falle der Veränderung, und insbesondere im anderen Falle nicht, insbesondere keiner Veränderung. Somit ermöglicht dies ein informationsreduziertes bzw. ressourcensparendes Speichern, insbesondere vorteilhaft für das mobile Garten-, Forst-, Bau- oder Bodenbearbeitungsgerät, bei welchem Ressourcen begrenzt sein können.

Insbesondere können/kann das Verfahren, das Bestimmen, das Erfassen und/oder das Speichern automatisch sein.

Der Begriff "Loggen", "Registrieren" oder "Triggern" kann für den Begriff "Bestimmen" synonym verwendet werden.

Das Bestimmen der Information kann ein Bestimmen eines Inhalts der Information sein.

Die Information kann qualitativ und/oder quantitativ sein.

Der Begriff "Ereignis" kann für den Begriff "Veränderung" synonym verwendet werden.

Die Veränderung kann eine Verschlechterung oder eine Verbesserung und/oder kurzzeitig, insbesondere zeitlich zwischen dem ersten Zeitraum und dem zweiten Zeitraum, sein.

Die Veränderung kann eine Veränderung einer Komponente und/oder einer Anwendung des Garten-, Forst-, Bau- oder Bodenbearbeitungsgeräts, insbesondere des Motorantriebssystems, sein.

Der Begriff "portabel" kann für den Begriff "mobil" synonym verwendet werden. Zusätzlich oder alternativ kann mobiles Garten-, Forst-, Bau- oder Bodenbearbeitungsgerät bedeuten, dass das Garten-, Forst-, Bau- oder Bodenbearbeitungsgerät eine Masse von maximal 50 kg (Kilogramm), insbesondere von maximal 20 kg, insbesondere von maximal 10 kg, insbesondere von maximal 5 kg, und/oder von minimal 0,5 kg, insbesondere von minimal 1 kg, insbesondere von minimal 2 kg, aufweisen kann.

Das Garten-, Forst-, Bau- oder Bodenbearbeitungsgerät kann ein Bearbeitungswerkzeug aufweisen. Zusätzlich oder alternativ kann das Antriebsmotorsystem zum, insbesondere automatischen, Antrieb des Garten-, Forst-, Bau- oder Bodenbearbeitungsgeräts, insbesondere des Bearbeitungswerkzeugs, ausgebildet sein.

Das Antriebsmotorsystem kann eine Antriebseinheit, insbesondere einen Antriebsmotor, eine, insbesondere elektrische, Motorsteuerung, insbesondere mit einer Auswerteeinrichtung bzw. - einheit, und/oder eine, insbesondere elektrische, Erfassungseinrichtung, insbesondere mindestens einen Sensor, aufweisen. Insbesondere können/kann der Schritt a) und/oder das Erfassen mittels der Erfassungseinrichtung ausgeführt werden. Zusätzlich oder alternativ können/kann der Schritt b) und/oder das Vergleichen mittels der Auswerteeinrichtung ausgeführt werden. Weiter zusätzlich oder alternativ können/kann die, insbesondere erfasste, Kenngröße zu der darauf basierenden Größe und/oder der Information ausgewertet werden, insbesondere mittels der Auswerteeinrichtung.

Der Begriff "konfiguriert" kann für den Begriff "ausgebildet" synonym verwendet werden.

Der Begriff "umfasst" oder "hat" kann für den Begriff "aufweist" synonym verwendet werden.

Zeitlich wiederholt kann mehrfach zeitlich wiederholt, zeitlich dauerhaft oder zeitlich kontinuierlich, insbesondere regelmäßig oder periodisch, sein, beispielsweise mit einer Wiederholfrequenz bzw. einer Abtastrate von maximal 1000 Hz (Hertz), insbesondere von maximal 100 Hz, insbesondere von maximal 10 Hz, insbesondere von maximal 1 Hz, und/oder von minimal 1 * 10⁻⁴ Hz, insbesondere von minimal 2,8 * 10⁻⁴ Hz.

Das Erfassen kann nicht nur mit fester Wiederholfrequenz, sondern auch getriggert durch eine Motorumdrehung ausgeführt werden, beispielsweise bei bis zu 15000 Umdrehungen pro Minute mit einer Wiederholfrequenz von 250 Hz. Zusätzlich oder alternativ kann das, insbesondere zeitlich wiederholte, Erfassen der Kenngröße ein, insbesondere zeitlich wiederholtes, Erfassen eines Werts, insbesondere von Werten, der Kenngröße sein.

Die Kenngröße und/oder die darauf basierende Größe können/kann physikalisch sein.

Die darauf basierende Größe kann auf der Kenngröße basieren. Zusätzlich oder alternativ kann die darauf basierende Größe ein zeitlicher Verlauf bzw. ein zeitlicher Gradient oder eine zeitliche Ableitung sein, insbesondere ermöglicht durch das zeitlich wiederholte Erfassen.

Der Begriff "Art" kann für den Begriff "Typ" synonym verwendet werden.

Der, insbesondere jeweilige, Zeitraum kann ein Erfassungs-Zeitraum sein.

Der Begriff "Zeitintervall" kann für den Begriff "Zeitraum" synonym verwendet werden.

Der zweite Zeitraum kann von dem ersten Zeitraum verschieden sein.

Das Speichern kann ein Speichern des Inhalts der Information sein.

Das Speichern kann, insbesondere nur, im Falle der, insbesondere ausreichenden, Veränderung ausgeführt werden, und insbesondere im anderen Falle nicht, insbesondere keiner, insbesondere ausreichenden, Veränderung.

Der Schritt b) kann zeitlich nach dem Schritt a) ausgeführt werden. Zusätzlich oder alternativ kann der Schritt c) zeitlich nach dem Schritt b) ausgeführt werden. Weiter zusätzlich oder alternativ können/kann der Schritt b) und/oder der Schritt c) zeitlich wiederholt ausgeführt werden. Weiter zusätzlich oder alternativ können/kann zeitlich nach dem Schritt c) der Schritt a) und/oder der Schritt b), insbesondere wiederholt, ausgeführt werden. Weiter zusätzlich oder alternativ kann das Verfahren zeitlich wiederholt ausgeführt werden.

In einer Weiterbildung der Erfindung weist das Garten-, Forst-, Bau- oder Bodenbearbeitungsgerät, insbesondere das Motorantriebssystem, eine Größen-Speichereinrichtung und/oder eine Ereignis-Speichereinrichtung auf. Der Schritt a) weist auf: Speichern, insbesondere zeitlich wiederholtes und/oder automatisches Speichern, der erfassten Kenngröße oder einer, insbesondere der, darauf basierenden Größe in der Größen-Speichereinrichtung. Der Schritt b) weist auf: Vergleichen mindestens, insbesondere nur, des ersten Werts der gespeicherten Kenngröße oder der gespeicherten Größe oder einer, insbesondere der, darauf basierenden Größe und mindestens, insbesondere nur, des zweiten Werts der gespeicherten Kenngröße, insbesondere eines selben Typs, oder der gespeicherten Größe, insbesondere eines selben Typs, oder der darauf basierenden Größe, insbesondere eines selben Typs, miteinander. Zusätzlich oder alternativ weist der Schritt c) auf: Speichern der Information in der Ereignis-Speichereinrichtung. Dies, insbesondere die Größen-Speichereinrichtung, ermöglicht das Vergleichen, insbesondere zu einem zeitlich nachhergehenden Zeitpunkt. Zusätzlich oder alternativ ermöglicht dies, insbesondere die Ereignis-Speichereinrichtung, das Speichern der Information. Insbesondere können/kann die Größen-Speichereinrichtung und/oder die Ereignis-Speichereinrichtung elektrisch und/oder digital sein. Zusätzlich oder alternativ kann die Ereignis-Speichereinrichtung von der Größen-Speichereinrichtung verschieden sein. Insbesondere können die Größen-Speichereinrichtung und die Ereignis-Speichereinrichtung verschiedene Speicherbereiche einer selben Speichereinrichtung sein. Weiter zusätzlich oder alternativ kann die auf der Kenngröße basierende Größe auf einer auf der Kenngröße basierenden Zwischengröße basieren, wobei die Zwischengröße gespeichert werden kann. Weiter zusätzlich oder alternativ kann das Speichern ein Speichern eines Werts, insbesondere von Werten, der Kenngröße, der Zwischengröße und/oder der darauf basierenden Größe sein. Weiter zusätzlich oder alternativ können/kann der erste Wert und/oder der zweite Wert in der Größen-Speichereinrichtung gespeichert werden oder sein.

In einer Ausgestaltung der Erfindung ist die Größen-Speichereinrichtung eine nichtflüchtige Größen-Speichereinrichtung. Zusätzlich oder alternativ ist die Ereignis-Speichereinrichtung eine nichtflüchtige Ereignis-Speichereinrichtung und/oder weist einen Ringspeicher auf, insbesondere ist der Ringspeicher. Dies ermöglicht, insbesondere die nichtflüchtige Größen-Speichereinrichtung und/oder die nichtflüchtige Ereignis-Speichereinrichtung ermöglichen/ermöglicht, ein zeitlich energiesparendes Speichern. Zusätzlich oder alternativ ermöglicht dies, insbesondere der Ringspeicher, einen minimalen Speicher. Insbesondere können/kann die Größen-Speichereinrichtung und/oder die Ereignis-Speichereinrichtung ein EEPROM-Speicher sein. Zusätzlich oder alternativ können/kann die nichtflüchtige Größen-Speichereinrichtung und/oder die nichtflüchtige Ereignis-Speichereinrichtung, insbesondere gemeinsam und/oder nur, 1 bis 8 kB (Kilobyte) aufweisen, insbesondere sein. Weiter zusätzlich oder alternativ kann die Ereignis-Speichereinrichtung eine FiFo-Speichereinrichtung (First In - First Out) aufweisen, insbesondere sein. Insbesondere kann der Begriff "Ringspeicher" für den Begriff "FiFo-Speichereinrichtung" synonym verwendet werden.

In einer Weiterbildung der Erfindung ist der zweite Zeitraum länger als der erste Zeitraum. Insbesondere ist der zweite Zeitraum ein Gesamtlaufzeit-Zeitraum bis auf den, insbesondere derzeitigen, ersten Zeitraum. Zusätzlich oder alternativ ist der zweite Zeitraum mindestens teilweise, insbesondere vollständig, zeitlich vor dem, insbesondere derzeitigen, ersten Zeitraum. Dies ermöglicht das Erkennen der, insbesondere kurzzeitigen, Veränderung. Insbesondere kann der erste Zeitraum, insbesondere nur, 0,5 bis 2 h (Stunden), insbesondere 1 h, lang sein. Zusätzlich oder alternativ kann mindestens, insbesondere nur, ein Wert, insbesondere ein Mittelwert und/oder ein kumulierter Wert, des Gesamtlaufzeit-Zeitraums in der Größen-Speichereinrichtung gespeichert werden oder sein.

In einer Weiterbildung der Erfindung weist der zweite Zeitraum, insbesondere nur, erste Zeiträume, insbesondere dem, insbesondere derzeitigen, ersten Zeitraum zeitlich vorhergehend, auf. Insbesondere ist der zweite Zeitraum die ersten Zeiträume. Zusätzlich oder alternativ ist der zweite Wert ein Mittelwert und/oder ein kumulierter Wert, insbesondere nur, von Werten der erfassten Kenngröße oder der darauf basierenden Größe, insbesondere nur, aus ersten Zeiträumen, insbesondere dem, insbesondere derzeitigen, ersten Zeitraum zeitlich vorhergehend. Dies ermöglicht ein informationsreduziertes bzw. ressourcensparendes Speichern, insbesondere in der Größen-Speichereinrichtung. Insbesondere kann der erste Wert ein Mittelwert und/oder ein kumulierter Wert, insbesondere nur, von Werten der erfassten Kenngröße oder der darauf basierenden Größe, insbesondere nur, aus dem, insbesondere derzeitigen, ersten Zeitraum sein. Zusätzlich oder alternativ kann der Mittelwert ein arithmetischer Mittelwert bzw. Durchschnittswert sein.

Insbesondere kann der Schritt b) aufweisen: Bilden, insbesondere zeitlich wiederholtes und/oder automatisches Bilden, einer Abweichung, insbesondere eines Werts der Abweichung, mindestens, insbesondere nur, des ersten Werts und mindestens, insbesondere nur, des zweiten Werts voneinander. Der Schritt c) weist auf: Speichern in Abhängigkeit davon, ob bzw. dass die Abweichung gleich oder größer als ein Abweichungsgrenzwert ist, oder insbesondere nicht. Das heißt bei einer kleinen oder keiner Abweichung kann oder braucht das Speichern nicht ausgeführt zu werden. Dies ermöglicht das Erkennen der Veränderung. Insbesondere kann der Abweichungsgrenzwert vorgegeben sein, insbesondere für einen Typ der Kenngröße oder der darauf basierenden Größen spezifisch, insbesondere typspezifisch. Zusätzlich oder alternativ kann der Begriff "Differenz" für den Begriff "Abweichung" synonym verwendet werden.

In einer Weiterbildung der Erfindung weist der Schritt b) auf: Bilden, insbesondere zeitlich wiederholtes und/oder automatisches Bilden, eines Verhältnisses, insbesondere eines Werts des Verhältnisses, mindestens, insbesondere nur, des ersten Werts und mindestens, insbesondere nur, des zweiten Werts zueinander. Der Schritt c) weist auf: Speichern in Abhängigkeit davon, ob bzw. dass das Verhältnis, insbesondere entweder, gleich oder größer als ein Verhältnismaximalgrenzwert oder gleich oder kleiner als ein Verhältnisminimalgrenzwert ist, oder insbesondere nicht, insbesondere wobei der Verhältnisminimalgrenzwert kleiner als der Verhältnismaximalgrenzwert ist. Das heißt bei einem Verhältnis kleiner als der Verhältnismaximalgrenzwert und/oder größer als der Verhältnisminimalgrenzwert kann oder braucht das Speichern nicht ausgeführt zu werden. Dies ermöglicht das Erkennen der Veränderung. Insbesondere können/kann der Verhältnismaximalgrenzwert und/oder der Verhältnisminimalgrenzwert vorgegeben sein, insbesondere für einen Typ der Kenngröße oder der darauf basierenden Größen spezifisch, insbesondere typspezifisch. Zusätzlich oder alternativ kann der Verhältnismaximalgrenzwert 120 % (Prozent) sein. Weiter zusätzlich oder alternativ kann der Verhältnisminimalgrenzwert 80 % sein. Weiter zusätzlich oder alternativ kann der Begriff "Berechnen" für den Begriff "Bilden" synonym verwendet werden.

In einer Weiterbildung der Erfindung weist der Schritt b) auf: zeitlich wiederholtes, und insbesondere automatisches, Vergleichen mindestens, insbesondere nur, eines, insbesondere derzeitigen, ersten Werts der erfassten Kenngröße oder der darauf basierenden Größe aus einem, insbesondere derzeitigen, ersten Zeitraum und mindestens eines, insbesondere derzeitigen, zweiten Werts der erfassten Kenngröße, insbesondere eines selben Typs, oder der darauf basierenden Größe, insbesondere eines selben Typs, aus einem, insbesondere derzeitigen, zweiten Zeitraum miteinander. Der Schritt c) weist auf: Speichern, insbesondere automatisches Speichern, der Information über die Veränderung des Garten-, Forst-, Bau- oder Bodenbearbeitungsgeräts in Abhängigkeit von einem Ergebnis, insbesondere eines selben Typs, des zeitlich wiederholten Vergleichens und davon, ob bzw. dass zeitlich, insbesondere direkt, vorhergehend bzw. bei mindestens einer zeitlich, insbesondere direkt, vorhergehenden Ausführung, insbesondere des Schritts c), nicht eine Information, insbesondere eines selben Typs, über eine Veränderung, insbesondere eines selben Typs, des Garten-, Forst-, Bau- oder Bodenbearbeitungsgeräts in Abhängigkeit von mindestens dem Ergebnis, insbesondere eines selben Typs, mindestens des zeitlich, insbesondere direkt, vorhergehenden Vergleichens gespeichert worden ist. Das heißt, insbesondere nur, einmaliges bzw. -faches Speichern der Information über die Veränderung des Garten-, Forst-, Bau- oder Bodenbearbeitungsgeräts in Abhängigkeit von dem, insbesondere unveränderten bzw. demselben, Ergebnis. Dies ermöglicht ein zeitlich, insbesondere direkt, nachhergehendes Speichern derselben Information zu vermeiden. Somit ermöglicht dies ein besonders informationsreduziertes bzw. ressourcensparendes Speichern, insbesondere in der Ereignis-Speichereinrichtung. Insbesondere kann der Schritt c) aufweisen: Speichern der Information über die Veränderung des Garten-, Forst-, Bau- oder Bodenbearbeitungsgeräts in Abhängigkeit von einem Ergebnis des zeitlich wiederholten Vergleichens und davon, ob bzw. dass zeitlich, insbesondere direkt, vorhergehend bzw. bei mindestens einer zeitlich, insbesondere direkt, vorhergehenden Ausführung, insbesondere des Schritts c), eine verschiedene Information, insbesondere eines verschiedenen Typs, über eine verschiedene Veränderung, insbesondere eines verschiedenen Typs, des Garten-, Forst-, Bau- oder Bodenbearbeitungsgeräts in Abhängigkeit von mindestens einem verschiedenen Ergebnis, insbesondere eines verschiedenen Typs, mindestens des zeitlich, insbesondere direkt, vorhergehenden Vergleichens gespeichert worden ist. Zusätzlich oder alternativ kann der Begriff "unmittelbar" für den Begriff "direkt" synonym verwendet werden.

In einer Weiterbildung der Erfindung weist die Information auf: einen Zeitstempel und/oder einen Identifikator, insbesondere einen Typ-Identifikator, identifizierend einen Typ der Kenngröße oder der darauf basierenden Größe. Dies ermöglicht eine Ursache der Veränderung zu erkennen bzw. zu finden, insbesondere zu einem zeitlich nachhergehenden Zeitpunkt.

In einer Weiterbildung der Erfindung weist die Kenngröße eine Drehzahl, eine Temperatur, einen Druck, eine Spannung, einen Strom, eine Zeitdauer und/oder einen Zeitpunkt auf. Insbesondere ist die Kenngröße eine solcher Typ Kenngröße. Zusätzlich oder alternativ basiert die auf der Kenngröße basierende Größe auf einer auf der Kenngröße basierenden Zwischengröße. Die Zwischengröße weist mindestens einen Anwerfhub, mindestens einen erfolgreichen Start, eine Gemischeinstellung, eine Anzahl von Gemischverstellungen, eine Anzahl von Eingriffen durch ein Motormanagement des Motorantriebssystems, eine Zündungsverstellung, mindestens ein Stoppen, mindestens eine Beschleunigung, mindestens eine Verzögerung, eine Umgebungs- und/oder Betriebsbedingung, eine Werkzeugerkennung, eine Anwendungserkennung und/oder eine Interaktion mit einer Umgebung auf. Insbesondere ist die Zwischengröße eine solcher Typ Zwischengröße. Weiter zusätzlich oder alternativ weist die auf der Kenngröße, insbesondere der Drehzahl, basierende Größe Anwerfhübe pro erfolgreicher Start und/oder ein Verhältnis einer Beschleunigung, insbesondere bei einer Betätigung eines benutzerbetätigbaren Motorbedienelements zu einer Bedienung des Motorantriebssystems, und einer Verzögerung, insbesondere bei einer zeitlich nachhergehenden Nicht-Betätigung des Motorbedienelements, zueinander auf. Insbesondere ist die darauf basierende Größe eine solcher Typ Größe. Dies ermöglicht beispielsweise ein schlechtes Start- und/oder Laufverhalten, eine Überdrehzahl durch Glühzünden, einen Betrieb des Motorantriebssystems bei extremen Umgebungsbedingungen und/oder eine Auslenkung eines Gemischreglers, insbesondere des Motorantriebssystems, zu erkennen. Insbesondere können die Anwerfhübe pro erfolgreichem Start ein Erkennen bzw. eine Aussage bzw. einen Rückschluss über eine Startwilligkeit des Motorantriebssystems ermöglichen bzw. geben bzw. zulassen. Zusätzlich oder alternativ kann das Verhältnis der Beschleunigung und der Verzögerung zueinander ein Erkennen bzw. ein Hinweis über eine Verlustleistung in dem Motorantriebssystem ermöglichen bzw. sein, beispielsweise verursacht durch ein kaputtes Lager und/oder ein verspanntes Werkzeug. Weiter zusätzlich oder alternativ kann die Kenngröße eine Bestromungsdauer eines Kraftstoffventils und/oder einen Zeitpunkt eines Bestromungsendes und/oder einer Zündungsausgabe aufweisen, insbesondere sein. Weiter zusätzlich oder alternativ kann die Kenngröße oder die Zwischengröße eine Umgebungstemperatur, eine Motortemperatur, einen Umgebungsdruck, einen Betriebsdruck und/oder eine Feuchtigkeit aufweisen, insbesondere sein, insbesondere basierend auf bzw. abgeleitet aus der Spannung. Weiter zusätzlich oder alternativ kann der Begriff "ComeDown" für den Begriff "Verzögerung" synonym verwendet werden. Weiter zusätzlich oder alternativ kann das Motorbedienelement ein benutzerbewegliches, und insbesondere selbstrückstellendes, Motorbedienelement sein. Weiter zusätzlich oder alternativ kann die Nicht-Betätigung des Motorbedienelements ein Loslassen des Motorbedienelements aufweisen, insbesondere sein. Weiter zusätzlich oder alternativ kann die Zwischengröße eine Werkzeugtyperkennung und/oder eine Werkzeugblockiererkennung aufweisen, insbesondere sein. Das heißt die Drehzahl ist für eine Zeitdauer größer als ein, insbesondere vorgegebener, Zeitdauergrenzwert durchgängig innerhalb eines, insbesondere vorgegebenen, Drehzahlfensters.

In einer Weiterbildung der Erfindung weist das Verfahren auf: Erfassen und/oder Speichern der Kenngröße und/oder einer, insbesondere der, darauf basierenden Größe und/oder Speichern der Information in Abhängigkeit von einem Betriebszustand des Motorantriebssystems. Insbesondere kann der Betriebszustand ein, insbesondere ausgeprägtes, Auftreten und/oder, insbesondere somit, ein, insbesondere einfaches, Erkennen, insbesondere einer Auswirkung, der Veränderung ermöglichen. Insbesondere kann der Betriebszustand ein Start und/oder eine Volllast des Motorantriebssystems aufweisen, insbesondere sein.

In einer Weiterbildung der Erfindung weist das Motorantriebssystem ein Verbrennungs- und/oder Elektromotorantriebssystem auf. Insbesondere ist das Motorantriebssystem das Verbrennungs- und/oder Elektromotorantriebssystem. Insbesondere kann das Garten-, Forst-, Bau- oder Bodenbearbeitungsgerät ein Akkugerät sein.

In einer Weiterbildung der Erfindung ist das Garten-, Forst-, Bau- oder Bodenbearbeitungsgerät handbedient und/oder -geführt, insbesondere handgetragen. Zusätzlich oder alternativ ist das Garten-, Forst-, Bau- oder Bodenbearbeitungsgerät ein Rasenmäher, ein Vertikutierer, eine Grasschere, eine Kreiselschere, ein Freischneider, eine Heckenschere, ein Heckenschneider, ein Gehölzschneider, eine Säge, ein Trennschleifer, ein Hoch-Entaster, eine Astschere, ein Olivenernter, ein Laubbläser, ein Blasgerät, ein Sauggerät, ein Laubsauger, ein Häckselgerät, ein Kehrgerät, eine Kehrwalze, eine Kehrbürste, ein Hochdruckreiniger, ein Reinigungsgerät, ein Erdbohrgerät, ein Gesteinsschneider, eine Motorhacke oder ein Sprüh- oder Spritzgerät. Bei einem solchen Typ Garten-, Forst-, Bau- oder Bodenbearbeitungsgerät können Ressourcen besonders begrenzt sein.

In einer Weiterbildung der Erfindung weist das Verfahren den Schritt auf: Übertragen, insbesondere kabelloses und/oder automatisches Übertragen, der gespeicherten Information oder einer darauf basierenden Information von dem Garten-, Forst-, Bau- oder Bodenbearbeitungsgerät, insbesondere an ein Diagnosegerät. Dies ermöglicht eine Ursache der Veränderung zu erkennen bzw. zu finden bzw. eine Diagnose, insbesondere des Garten-, Forst-, Bau- oder Bodenbearbeitungsgeräts. Zusätzlich oder alternativ ermöglicht dies eine Reklamation, insbesondere eines Benutzers des Garten-, Forst-, Bau- oder Bodenbearbeitungsgeräts, verstehen zu können, insbesondere wobei der Benutzer eine Auffälligkeit des Garten-, Forst-, Bau- oder Bodenbearbeitungsgeräts nicht adäquat benennen kann. Weiter zusätzlich oder alternativ ermöglicht dies eine, insbesondere zielführende, Handlungsempfehlung zu dem Garten-, Forst-, Bau- oder Bodenbearbeitungsgerät geben zu können. Weiter zusätzlich oder alternativ ermöglicht dies eine Diagnose, insbesondere des Garten-, Forst-, Bau- oder Bodenbearbeitungsgeräts, onboard zu vermeiden. Somit ermöglicht dies, dass Ressourcen des Garten-, Forst-, Bau- oder Bodenbearbeitungsgeräts begrenzt sein können. Insbesondere kann das Diagnosegerät, insbesondere im Vergleich zu dem Garten-, Forst-, Bau- oder Bodenbearbeitungsgerät relativ leicht, updatefähig sein. Somit kann dies eine aktuelle und/oder flexible Interpretation der Information ermöglichen. Insbesondere kann das Übertragen kabelgebunden sein. Zusätzlich oder alternativ kann der Begriff "drahtlos" für den Begriff "kabellos" synonym verwendet werden. Weiter zusätzlich oder alternativ kann das Übertragen ein Übertragen eines, insbesondere des, Inhalts der Information sein. Weiter zusätzlich oder alternativ kann das Übertragen, insbesondere kabellos, mittels eines Gateways sein. Weiter zusätzlich oder alternativ kann das Diagnosegerät von dem Garten-, Forst-, Bau- oder Bodenbearbeitungsgerät verschieden, insbesondere getrennt bzw. separat, sein. Weiter zusätzlich oder alternativ kann das Diagnosegerät in Form einer Cloud sein. Weiter zusätzlich oder alternativ kann das Diagnosegerät mobil und/oder elektrisch sein und/oder eine Ausgabeeinrichtung, insbesondere eine Anzeige, zur Ausgabe der übertragenen Information oder einer darauf basierenden Information aufweisen, insbesondere ein Smartphone.

Das erfindungsgemäße mobile Garten-, Forst-, Bau- oder Bodenbearbeitungsgerät ist zum, insbesondere zu dem und/oder automatischen, Bestimmen einer, insbesondere der, Information über eine, insbesondere die, Veränderung des Garten-, Forst-, Bau- oder Bodenbearbeitungsgeräts ausgebildet. Das Garten-, Forst-, Bau- oder Bodenbearbeitungsgerät weist ein, insbesondere das, Motorantriebssystem auf. Das Garten-, Forst-, Bau- oder Bodenbearbeitungsgerät ist dazu ausgebildet: zum, insbesondere zu dem, zeitlich wiederholten, und insbesondere automatischen, Erfassen einer, insbesondere der, Kenngröße des Motorantriebssystems. Zum, insbesondere zu dem und/oder automatischen, Vergleichen mindestens eines, insbesondere des, ersten Werts der erfassten Kenngröße oder einer, insbesondere der, darauf basierenden Größe aus einem, insbesondere dem, ersten Zeitraum und mindestens eines, insbesondere des, zweiten Werts der erfassten Kenngröße oder der darauf basierenden Größe aus einem, insbesondere dem, zweiten Zeitraum miteinander. Zum, insbesondere zu dem und/oder automatischen, Speichern der Information über die Veränderung des Garten-, Forst-, Bau- oder Bodenbearbeitungsgeräts in Abhängigkeit von einem, insbesondere dem, Ergebnis des Vergleichens.

Das Garten-, Forst-, Bau- oder Bodenbearbeitungsgerät kann den/die gleichen Vorteil/e ermöglichen wie das Verfahren vorhergehend genannt.

Insbesondere kann das Garten-, Forst-, Bau- oder Bodenbearbeitungsgerät zum, insbesondere automatischen, Ausführen eines, insbesondere des, Verfahrens wie vorhergehend genannt ausgebildet sein.

Das erfindungsgemäße System weist ein mobiles, insbesondere das mobile, Garten-, Forst-, Bau- oder Bodenbearbeitungsgerät wie vorhergehend genannt und ein, insbesondere das, Diagnosegerät auf. Das Garten-, Forst-, Bau- oder Bodenbearbeitungsgerät ist dazu ausgebildet: zum, insbesondere zu dem, Übertragen, insbesondere kabellosen und/oder automatischen Übertragen, der gespeicherten Information oder einer, insbesondere der, darauf basierenden Information von dem Garten-, Forst-, Bau- oder Bodenbearbeitungsgerät an das Diagnosegerät.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgenden anhand der Figuren erläutert sind. Dabei zeigen:
- Fig. 1: schematisch ein erfindungsgemäßes System aufweisend ein mobiles Garten-, Forst-, Bau- oder Bodenbearbeitungsgerät und ein Diagnosegerät und ein erfindungsgemäßes Verfahren zum Bestimmen einer Information über eine Veränderung des mobilen Garten-, Forst-, Bau- oder Bodenbearbeitungsgeräts,
- Fig. 2: schematisch Details des Garten-, Forst-, Bau- oder Bodenbearbeitungsgeräts und des Verfahrens der Fig. 1,
- Fig. 3: schematisch weitere Details des Systems, des Garten-, Forst-, Bau- oder Bodenbearbeitungsgeräts und des Verfahrens der Fig. 1,
- Fig. 4: schematisch einen zeitlichen Verlauf einer Größe in Form von Anwerfhüben pro erfolgreichem Start, und
- Fig. 5: schematisch einen zeitlichen Verlauf einer Größe in Form eines Verhältnisses einer Beschleunigung und einer Verzögerung zueinander.

### DETAILLIERTE BESCHREIBUNG DER AUSFÜHRUNGSBEISPIELE

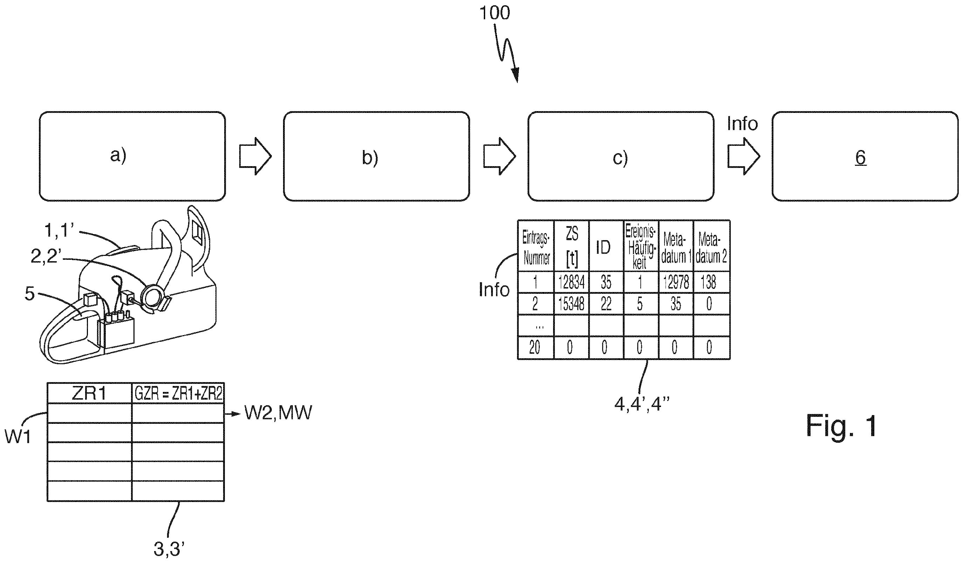

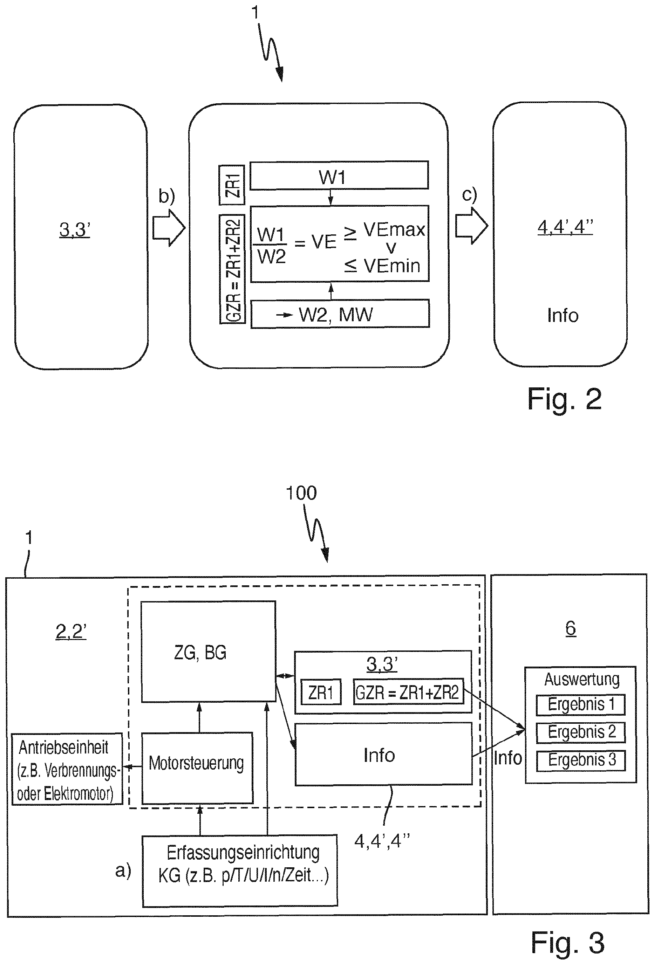

Fig. 1 und 3 zeigen ein erfindungsgemäßes System 100. Das System 100 weist ein erfindungsgemäßes mobiles Garten-, Forst-, Bau- oder Bodenbearbeitungsgerät 1 zum Bestimmen einer Information Info über eine Veränderung VA des Garten-, Forst-, Bau- oder Bodenbearbeitungsgeräts 1 auf, wie in Fig. 1 bis 5 gezeigt.

Das Garten-, Forst-, Bau- oder Bodenbearbeitungsgerät 1 weist ein Motorantriebssystem 2 auf.

Das Garten-, Forst-, Bau- oder Bodenbearbeitungsgerät 1 ist dazu ausgebildet: zum zeitlich wiederholten Erfassen einer Kenngröße KG des Motorantriebssystems 2, insbesondere erfasst. Zum Vergleichen mindestens eines ersten Werts W1 der erfassten Kenngröße oder einer darauf basierenden Größe BG1 aus einem ersten Zeitraum ZR1 und mindestens eines zweiten Werts W2 der erfassten Kenngröße oder der darauf basierenden Größe BG2 aus einem zweiten Zeitraum miteinander, insbesondere vergleicht. Zum Speichern der Information Info über die Veränderung VA des Garten-, Forst-, Bau- oder Bodenbearbeitungsgeräts 1 in Abhängigkeit von einem Ergebnis des Vergleichens, insbesondere speichert.

Fig. 1 bis 3 zeigen ein erfindungsgemäßes Verfahren zu dem Bestimmen der Information über die Veränderung VA des mobilen Garten-, Forst-, Bau- oder Bodenbearbeitungsgeräts 1. Das Verfahren weist die Schritte auf: a) zeitlich wiederholtes Erfassen der Kenngröße KG des Motorantriebssystems 2, insbesondere mittels des Garten-, Forst-, Bau- oder Bodenbearbeitungsgeräts 1. b) Vergleichen mindestens des ersten Werts W1 der erfassten Kenngröße oder der darauf basierenden Größe BG1 aus dem ersten Zeitraum ZR1 und mindestens des zweiten Werts W2 der erfassten Kenngröße oder der darauf basierenden Größe BG2 aus einem zweiten Zeitraum ZR2 miteinander, insbesondere mittels des Garten-, Forst-, Bau- oder Bodenbearbeitungsgeräts 1. c) Speichern der Information Info über die Veränderung VA des Garten-, Forst-, Bau- oder Bodenbearbeitungsgeräts 1 in Abhängigkeit von dem Ergebnis des Vergleichens, insbesondere mittels des Garten-, Forst-, Bau- oder Bodenbearbeitungsgeräts 1.

Im Detail weist das Verfahren den Schritt auf: Übertragen der gespeicherten Information Info oder einer darauf basierenden Information von dem Garten-, Forst-, Bau- oder Bodenbearbeitungsgerät 1, insbesondere an ein Diagnosegerät 6.

Das System 100 weist das Diagnosegerät 6 auf. Das Garten-, Forst-, Bau- oder Bodenbearbeitungsgerät 1 ist dazu ausgebildet: zu dem Übertragen der gespeicherten Information Info oder der darauf basierenden Information von dem Garten-, Forst-, Bau- oder Bodenbearbeitungsgerät 1 an das Diagnosegerät 6, insbesondere überträgt.

Des Weiteren ist das Garten-, Forst-, Bau- oder Bodenbearbeitungsgerät 1 handbedient und/oder -geführt, insbesondere handgetragen.

In dem gezeigten Ausführungsbeispiel ist das Garten-, Forst-, Bau- oder Bodenbearbeitungsgerät 1 eine Säge 1'. In alternativen Ausführungsbeispielen kann das Garten-, Forst-, Bau- oder Bodenbearbeitungsgerät ein Rasenmäher, ein Vertikutierer, eine Grasschere, eine Kreiselschere, ein Freischneider, eine Heckenschere, ein Heckenschneider, ein Gehölzschneider, ein Trennschleifer, ein Hoch-Entaster, eine Astschere, ein Olivenernter, ein Laubbläser, ein Blasgerät, ein Sauggerät, ein Laubsauger, ein Häckselgerät, ein Kehrgerät, eine Kehrwalze, eine Kehrbürste, ein Hochdruckreiniger, ein Reinigungsgerät, ein Erdbohrgerät, ein Gesteinsschneider, eine Motorhacke oder ein Sprüh- oder Spritzgerät sein.

Außerdem weist das Motorantriebssystem 2 ein Verbrennungs- und/oder Elektromotorantriebssystem 2' auf. Insbesondere ist das Motorantriebssystem 2 das Verbrennungs- und/oder Elektromotorantriebssystem 2'.

Weiter weist das Garten-, Forst-, Bau- oder Bodenbearbeitungsgerät 1 eine Größen-Speichereinrichtung 3 und/oder eine Ereignis-Speichereinrichtung 4 auf. Der Schritt a) weist auf: Speichern der erfassten Kenngröße oder einer darauf basierenden Größe ZG1, ZG2 in der Größen-Speichereinrichtung. Der Schritt b) weist auf: Vergleichen mindestens des ersten Werts W1 der gespeicherten Kenngröße oder der gespeicherten Größe oder einer, insbesondere der, darauf basierenden Größe BG1 und mindestens des zweiten Werts W2 der gespeicherten Kenngröße oder der gespeicherten Größe oder der darauf basierenden Größe BG2 miteinander. Zusätzlich oder alternativ weist der Schritt c) auf: Speichern der Information Info in der Ereignis-Speichereinrichtung 4.

Im Detail ist die Größen-Speichereinrichtung 3 eine nichtflüchtige Größen-Speichereinrichtung 3'. Zusätzlich oder alternativ ist die Ereignis-Speichereinrichtung 4 eine nichtflüchtige Ereignis-Speichereinrichtung 4' und/oder weist einen Ringspeicher 4" auf, insbesondere ist der Ringspeicher 4".

Zudem ist der zweite Zeitraum ZR2 länger als der erste Zeitraum ZR1. Insbesondere ist der zweite Zeitraum ZR2 ein Gesamtlaufzeit-Zeitraum GZR bis auf den, insbesondere derzeitigen, ersten Zeitraum ZR1. Zusätzlich oder alternativ ist der zweite Zeitraum ZR2 mindestens teilweise, insbesondere vollständig, zeitlich vor dem, insbesondere derzeitigen, ersten Zeitraum ZR1.

Des Weiteren weist der zweite Zeitraum ZR2 erste Zeiträume ZR1', insbesondere dem, insbesondere derzeitigen, ersten Zeitraum ZR1 zeitlich vorhergehend, auf. Insbesondere ist der zweite Zeitraum ZR2 die ersten Zeiträume ZR1'. Zusätzlich oder alternativ ist der zweite Wert W2 ein Mittelwert MW und/oder ein kumulierter Wert von Werten W1' der erfassten Kenngröße oder der darauf basierenden Größe BG1' aus ersten Zeiträumen ZR1', insbesondere dem, insbesondere derzeitigen, ersten Zeitraum ZR1 zeitlich vorhergehend.

Außerdem weist der Schritt b) auf: Bilden eines Verhältnisses VE mindestens des ersten Werts W1 und mindestens des zweiten Werts W2 zueinander, insbesondere mittels des Garten-, Forst-, Bau- oder Bodenbearbeitungsgeräts 1. Der Schritt c) weist auf: Speichern in Abhängigkeit davon, ob das Verhältnis VE gleich oder größer als ein Verhältnismaximalgrenzwert VEmax oder gleich oder kleiner als ein Verhältnisminimalgrenzwert VEmin ist, insbesondere wobei der Verhältnisminimalgrenzwert VEmin kleiner als der Verhältnismaximalgrenzwert VEmax ist.

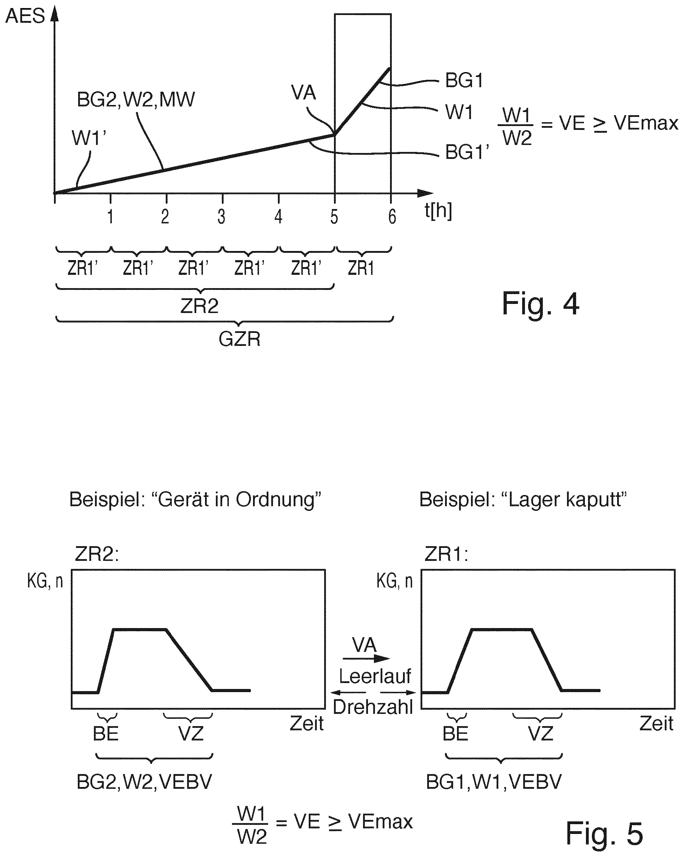

In Fig. 4 und 5 ist das Verhältnis VE gleich oder größer als der Verhältnismaximalgrenzwert VEmax. Somit wird gespeichert.

Weiter weist der Schritt b) auf: zeitlich wiederholtes Vergleichen mindestens eines, insbesondere derzeitigen, ersten Werts W1 der erfassten Kenngröße oder der darauf basierenden Größe BG1 aus einem, insbesondere derzeitigen, ersten Zeitraum ZR1 und mindestens eines, insbesondere derzeitigen, zweiten Werts W2 der erfassten Kenngröße oder der darauf basierenden Größe BG2 aus einem, insbesondere derzeitigen, zweiten Zeitraum ZR2 miteinander. Der Schritt c) weist auf: Speichern der Information Info über die Veränderung VA des Garten-, Forst-, Bau- oder Bodenbearbeitungsgeräts 1 in Abhängigkeit von einem Ergebnis des zeitlich wiederholten Vergleichens und davon, ob zeitlich, insbesondere direkt, vorhergehend nicht eine Information über eine Veränderung des Garten-, Forst-, Bau- oder Bodenbearbeitungsgeräts in Abhängigkeit von mindestens dem Ergebnis mindestens des zeitlich, insbesondere direkt, vorhergehenden Vergleichens gespeichert worden ist.

Das heißt ist nach einem Speichern der Information für mindestens eine Ausführung des Verfahrens, insbesondere des Schritts b) und/oder des Schritts c), bzw. ein Arbeitsspiel keine Bedingung für das Speichern mehr erfüllt, so ist in den zeitlich nachhergehenden bzw. folgenden Ausführungen des Verfahrens, insbesondere des Schritts b) und/oder des Schritts c), bzw. Arbeitsspielen ein erneutes Speichern der Information wieder zugelassen.

Zudem weist die Information Info auf: einen Zeitstempel ZS und/oder einen Identifikator ID identifizierend einen Typ der Kenngröße oder der darauf basierenden Größe BG.

Des Weiteren weist die Kenngröße KG eine Drehzahl n, eine Temperatur T, einen Druck p, eine Spannung U, einen Strom I, eine Zeitdauer und/oder einen Zeitpunkt auf. Insbesondere ist die Kenngröße eine solcher Typ Kenngröße. Zusätzlich oder alternativ basiert die auf der Kenngröße KG basierende Größe BG auf einer auf der Kenngröße KG basierenden Zwischengröße ZG. Die Zwischengröße ZG weist mindestens einen Anwerfhub A, mindestens einen erfolgreichen Start ES, eine Gemischeinstellung, eine Anzahl von Gemischverstellungen, eine Anzahl von Eingriffen durch ein Motormanagement des Motorantriebssystems, eine Zündungsverstellung, mindestens ein Stoppen, mindestens eine Beschleunigung BE, mindestens eine Verzögerung VZ, eine Umgebungs- und/oder Betriebsbedingung, eine Werkzeugerkennung, eine Anwendungserkennung und/oder eine Interaktion mit einer Umgebung auf. Insbesondere ist die Zwischengröße eine solcher Typ Zwischengröße. Weiter zusätzlich oder alternativ weist die auf der Kenngröße KG, insbesondere der Drehzahl n, basierende Größe BG Anwerfhübe pro erfolgreicher Start AES, wie in Fig. 4 gezeigt, und/oder ein Verhältnis VEBV einer Beschleunigung BE, insbesondere bei einer Betätigung eines benutzerbetätigbaren Motorbedienelements 5 zu einer Bedienung des Motorantriebssystems 2, und einer Verzögerung VZ, insbesondere bei einer zeitlich nachhergehenden Nicht-Betätigung des Motorbedienelements 5, zueinander auf, wie in Fig. 5 gezeigt. Insbesondere ist die darauf basierende Größe eine solcher Typ Größe.

Bei einem ordnungsgemäßen Garten-, Forst-, Bau- oder Bodenbearbeitungsgerät mit Niederdruckeinspritzung bewegen sich die Anwerfhübe pro erfolgreicher Start AES zwischen 1,3 und 1,5. Ist der Wert deutlich darüber, z.B. gleich oder größer 2, deutet das auf eine Veränderung und somit ein Problem hin. Bei einem ordnungsgemäßen Nicht-Niederdruckeinspritzung Garten-, Forst-, Bau- oder Bodenbearbeitungsgerät können die Werte auch deutlich größer sein, insbesondere größer 2, da hier der Vorteil der Niederdruckeinspritzung (Vorsteuerung von Zündung/Einspritzung auf Basis von Temperatur- und Umgebungsdruck) wegfällt.

Bei einer Veränderung eines Garten-, Forst-, Bau- oder Bodenbearbeitungsgeräts von einem ordnungsgemäßen Zustand, wie in Fig. 5 links gezeigt, zu einem kaputten Zustand, insbesondere aufgrund eines kaputten Lagers, wie in Fig. 5 rechts gezeigt, muss das Motorantriebssystem, insbesondere das Triebwerk, durch die gestiegene Reibung mehr Leistung bei der Beschleunigung aufbringen. Die Zeitdauer der Beschleunigung vergrößert bzw. verlängert sich. Damit einhergehend wird die Verzögerung steiler. Somit ändert sich das Verhältnis der Beschleunigung und der Verzögerung zueinander.

Außerdem weist das Verfahren auf: Erfassen und/oder Speichern der Kenngröße KG und/oder einer, insbesondere der, darauf basierenden Größe ZG, BG und/oder Speichern der Information Info in Abhängigkeit von einem Betriebszustand des Motorantriebssystems 2.

Wie die gezeigten und oben erläuterten Ausführungsbeispiele deutlich machen, stellt die Erfindung ein vorteilhaftes Verfahren zum Bestimmen einer Information über eine Veränderung eines mobilen Garten-, Forst-, Bau- oder Bodenbearbeitungsgeräts, ein vorteilhaftes mobiles Garten-, Forst-, Bau- oder Bodenbearbeitungsgerät zum Bestimmen einer Information über eine Veränderung des Garten-, Forst-, Bau- oder Bodenbearbeitungsgeräts und ein vorteilhaftes System aufweisend ein solches Garten-, Forst-, Bau- oder Bodenbearbeitungsgerät bereit, wobei das Verfahren, das Garten-, Forst-, Bau- oder Bodenbearbeitungsgerät und das System jeweils verbesserte Eigenschaften aufweisen.

## Patentansprüche

1. Verfahren zum Bestimmen einer Information (Info) über eine Veränderung (VA) eines mobilen Garten-, Forst-, Bau- oder Bodenbearbeitungsgeräts (1), wobei das Garten-, Forst-, Bau- oder Bodenbearbeitungsgerät (1) ein Motorantriebssystem (2) aufweist, wobei das Verfahren die Schritte aufweist:
a) zeitlich wiederholtes Erfassen einer Kenngröße (KG) des Motorantriebssystems (2),
b) Vergleichen mindestens eines ersten Werts (W1) der erfassten Kenngröße oder einer darauf basierenden Größe (BG1) aus einem ersten Zeitraum (ZR1) und mindestens eines zweiten Werts (W2) der erfassten Kenngröße oder der darauf basierenden Größe (BG2) aus einem zweiten Zeitraum (ZR2) miteinander, und
c) Speichern der Information (Info) über die Veränderung (VA) des Garten-, Forst-, Bau- oder Bodenbearbeitungsgeräts (1) in Abhängigkeit von einem Ergebnis des Vergleichens.

2. Verfahren nach dem vorhergehenden Anspruch,
- wobei das Garten-, Forst-, Bau- oder Bodenbearbeitungsgerät (1) eine Größen-Speichereinrichtung (3) und/oder eine Ereignis-Speichereinrichtung (4) aufweist, und
- wobei der Schritt a) aufweist: Speichern der erfassten Kenngröße oder einer darauf basierenden Größe (ZG1, ZG2) in der Größen-Speichereinrichtung (3), und wobei der Schritt b) aufweist: Vergleichen mindestens des ersten Werts (W1) der gespeicherten Kenngröße oder der gespeicherten Größe oder einer darauf basierenden Größe (BG1) und mindestens des zweiten Werts (W2) der gespeicherten Kenngröße oder der gespeicherten Größe oder der darauf basierenden Größe (BG2) miteinander, und/oder
- wobei der Schritt c) aufweist: Speichern der Information (Info) in der Ereignis-Speichereinrichtung (4).

3. Verfahren nach dem vorhergehenden Anspruch,
- wobei die Größen-Speichereinrichtung (3) eine nichtflüchtige Größen-Speichereinrichtung (3') ist, und/oder
- wobei die Ereignis-Speichereinrichtung (4) eine nichtflüchtige Ereignis-Speichereinrichtung (4') ist und/oder einen Ringspeicher (4") aufweist, insbesondere der Ringspeicher (4") ist.

4. Verfahren nach einem der vorhergehenden Ansprüche,
- wobei der zweite Zeitraum (ZR2) länger als der erste Zeitraum (ZR1) ist, insbesondere ein Gesamtlaufzeit-Zeitraum (GZR) bis auf den, insbesondere derzeitigen, ersten Zeitraum (ZR1) ist, und/oder
- wobei der zweite Zeitraum (ZR2) mindestens teilweise, insbesondere vollständig, zeitlich vor dem, insbesondere derzeitigen, ersten Zeitraum (ZR1) ist.

5. Verfahren nach einem der vorhergehenden Ansprüche,
- wobei der zweite Zeitraum (ZR2) erste Zeiträume (ZR1'), insbesondere dem, insbesondere derzeitigen, ersten Zeitraum (ZR1) zeitlich vorhergehend, aufweist, insbesondere ist, und/oder
- wobei der zweite Wert (W2) ein Mittelwert (MW) und/oder ein kumulierter Wert von Werten (W1) der erfassten Kenngröße oder der darauf basierenden Größe (BG1') aus ersten Zeiträumen (ZR1`), insbesondere dem, insbesondere derzeitigen, ersten Zeitraum (ZR1) zeitlich vorhergehend, ist.

6. Verfahren nach einem der vorhergehenden Ansprüche,
- wobei der Schritt b) aufweist: Bilden eines Verhältnisses (VE) mindestens des ersten Werts (W1) und mindestens des zweiten Werts (W2) zueinander, und
- wobei der Schritt c) aufweist: Speichern in Abhängigkeit davon, ob das Verhältnis (VE) gleich oder größer als ein Verhältnismaximalgrenzwert (VEmax) oder gleich oder kleiner als ein Verhältnisminimalgrenzwert (VEmin) ist, insbesondere wobei der Verhältnisminimalgrenzwert (VEmin) kleiner als der Verhältnismaximalgrenzwert (VEmax) ist.

7. Verfahren nach einem der vorhergehenden Ansprüche,
- wobei der Schritt b) aufweist: zeitlich wiederholtes Vergleichen mindestens eines, insbesondere derzeitigen, ersten Werts (W1) der erfassten Kenngröße oder der darauf basierenden Größe (BG1) aus einem, insbesondere derzeitigen, ersten Zeitraum (ZR1) und mindestens eines, insbesondere derzeitigen, zweiten Werts (W2) der erfassten Kenngröße oder der darauf basierenden Größe (BG2) aus einem, insbesondere derzeitigen, zweiten Zeitraum (ZR2) miteinander, und
- wobei der Schritt c) aufweist: Speichern der Information (Info) über die Veränderung (VA) des Garten-, Forst-, Bau- oder Bodenbearbeitungsgeräts (1) in Abhängigkeit von einem Ergebnis des zeitlich wiederholten Vergleichens und davon, ob zeitlich, insbesondere direkt, vorhergehend nicht eine Information über eine Veränderung des Garten-, Forst-, Bau- oder Bodenbearbeitungsgeräts in Abhängigkeit von mindestens dem Ergebnis mindestens des zeitlich, insbesondere direkt, vorhergehenden Vergleichens gespeichert worden ist.

8. Verfahren nach einem der vorhergehenden Ansprüche,
- wobei die Information (Info) aufweist: einen Zeitstempel (ZS) und/oder einen Identifikator (ID) identifizierend einen Typ der Kenngröße (KG) oder der darauf basierenden Größe (BG).

9. Verfahren nach einem der vorhergehenden Ansprüche,
- wobei die Kenngröße (KG) eine Drehzahl (n), eine Temperatur (T), einen Druck (p), eine Spannung (U), einen Strom (I), eine Zeitdauer und/oder einen Zeitpunkt aufweist, insbesondere ist, und/oder
- wobei die auf der Kenngröße (KG) basierende Größe (BG) auf einer auf der Kenngröße (KG) basierenden Zwischengröße (ZG) basiert, wobei die Zwischengröße (ZG) mindestens einen Anwerfhub (A), mindestens einen erfolgreichen Start (ES), eine Gemischeinstellung, eine Anzahl von Gemischverstellungen, eine Anzahl von Eingriffen durch ein Motormanagement des Motorantriebssystems, eine Zündungsverstellung, mindestens ein Stoppen, mindestens eine Beschleunigung (BE), mindestens eine Verzögerung (VZ), eine Umgebungs- und/oder Betriebsbedingung, eine Werkzeugerkennung, eine Anwendungserkennung und/oder eine Interaktion mit einer Umgebung aufweist, insbesondere ist, und/oder
- wobei die auf der Kenngröße (KG), insbesondere der Drehzahl (n), basierende Größe (BG) Anwerfhübe pro erfolgreicher Start (AES) und/oder ein Verhältnis (VEBV) einer Beschleunigung (BE), insbesondere bei einer Betätigung eines benutzerbetätigbaren Motorbedienelements (5) zu einer Bedienung des Motorantriebssystems (2), und einer Verzögerung (VZ), insbesondere bei einer zeitlich nachhergehenden Nicht-Betätigung des Motorbedienelements (5), zueinander aufweist, insbesondere ist.

10. Verfahren nach einem der vorhergehenden Ansprüche,
- wobei das Verfahren aufweist: Erfassen und/oder Speichern der Kenngröße (KG) und/oder einer darauf basierenden Größe (ZG, BG) und/oder Speichern der Information (Info) in Abhängigkeit von einem Betriebszustand des Motorantriebssystems (2).

11. Verfahren nach einem der vorhergehenden Ansprüche,
- wobei das Motorantriebssystem (2) ein Verbrennungs- und/oder Elektromotorantriebssystem (2') aufweist, insbesondere ist.

12. Verfahren nach einem der vorhergehenden Ansprüche,
- wobei das Garten-, Forst-, Bau- oder Bodenbearbeitungsgerät (1) handbedient und/oder -geführt, insbesondere handgetragen, ist, und/oder
- wobei das Garten-, Forst-, Bau- oder Bodenbearbeitungsgerät (1) ein Rasenmäher, ein Vertikutierer, eine Grasschere, eine Kreiselschere, ein Freischneider, eine Heckenschere, ein Heckenschneider, ein Gehölzschneider, eine Säge (1'), ein Trennschleifer, ein Hoch-Entaster, eine Astschere, ein Olivenernter, ein Laubbläser, ein Blasgerät, ein Sauggerät, ein Laubsauger, ein Häckselgerät, ein Kehrgerät, eine Kehrwalze, eine Kehrbürste, ein Hochdruckreiniger, ein Reinigungsgerät, ein Erdbohrgerät, ein Gesteinsschneider, eine Motorhacke oder ein Sprüh- oder Spritzgerät ist.

13. Verfahren nach einem der vorhergehenden Ansprüche,
- wobei das Verfahren den Schritt aufweist: Übertragen, insbesondere kabelloses Übertragen, der gespeicherten Information (Info) oder einer darauf basierenden Information von dem Garten-, Forst-, Bau- oder Bodenbearbeitungsgerät (1), insbesondere an ein Diagnosegerät (6).

14. Mobiles Garten-, Forst-, Bau- oder Bodenbearbeitungsgerät (1) zum Bestimmen einer Information (Info) über eine Veränderung (VA) des Garten-, Forst-, Bau- oder Bodenbearbeitungsgeräts (1), insbesondere zum Ausführen eines Verfahrens nach einem der vorhergehenden Ansprüche,
- wobei das Garten-, Forst-, Bau- oder Bodenbearbeitungsgerät (1) ein Motorantriebssystem (2) aufweist, und
- wobei das Garten-, Forst-, Bau- oder Bodenbearbeitungsgerät (1) dazu ausgebildet ist:
- zum zeitlich wiederholten Erfassen einer Kenngröße (KG) des Motorantriebssystems (2),
- zum Vergleichen mindestens eines ersten Werts (W1) der erfassten Kenngröße oder einer darauf basierenden Größe (BG1) aus einem ersten Zeitraum (ZR1) und mindestens eines zweiten Werts (W2) der erfassten Kenngröße oder der darauf basierenden Größe (BG2) aus einem zweiten Zeitraum (ZR2) miteinander, und
- zum Speichern der Information (Info) über die Veränderung (VA) des Garten-, Forst-, Bau- oder Bodenbearbeitungsgeräts (1) in Abhängigkeit von einem Ergebnis des Vergleichens.

15. System (100) aufweisend:
- ein mobiles Garten-, Forst-, Bau- oder Bodenbearbeitungsgerät (1) nach dem vorhergehenden Anspruch, und
- ein Diagnosegerät (6),
- wobei das Garten-, Forst-, Bau- oder Bodenbearbeitungsgerät (1) dazu ausgebildet ist: zum Übertragen, insbesondere kabellosen Übertragen, der gespeicherten Information (Info) oder einer darauf basierenden Information von dem Garten-, Forst-, Bau- oder Bodenbearbeitungsgerät (1) an das Diagnosegerät (6).
